# FASCICULE DE BREVET EUROPEEN

(11) **EP 2 096 967 B1**
(45) Date de publication et mention de la délivrance du brevet: **25.09.2013**
(21) Numéro de dépôt: 07872442.4
(22) Date de dépôt: 26.12.2007
(51) Int. Cl.: A47J 27/08

(54) **APPAREIL DE CUISSON SOUS PRESSION**
DRUCKKOCHTOPF
PRESSURE COOKER DEVICE

(30) Priorité: 28.12.2006 FR 0611475
(43) Date de publication de la demande: 09.09.2009
(73) Titulaire: SEB S.A., 69132 Ecully Cedex (FR)
(72) Inventeur: CHAMEROY, Eric, F-21260 Veronnes (FR); SEURAT GUIOCHET, Claire, Marie-Aurore, F-21490 Bretigny (FR)
(74) Mandataire: Weber, Jean-François
(86) Numéro de dépôt international: PCT/FR2007/002165
(87) Numéro de publication internationale: WO 2008/102072

(56) Documents cités:
- WO-A-2006/056253
- CH-A- 303 230

## Description

### DOMAINE TECHNIQUE

La présente invention se rapporté au domaine technique général des appareils de cuisson d'aliments, notamment de nature domestique, destinés à former une enceinte de cuisson hermétique au sein de laquelle sont cuits les aliments sous pression de vapeur.

La présente invention concerne plus particulièrement un appareil de cuisson sous pression à couvercle rentrant comprenant au moins :
- une cuve et un couvercle conçu pour être rapporté dans la cuve avec une faculté de mobilité entre au moins d'une part une position de fermeture dans laquelle il forme avec la cuve une enceinte de cuisson sensiblement étanche, et d'autre part une position d'ouverture dans laquelle il permet la communication de l'intérieur de l'enceinte avec l'extérieur,
- un moyen de commande du déplacement du couvercle entre ses positions de fermeture et d'ouverture, le couvercle étant suspendu au moyen de commande en une zone d'accrochage.

### TECHNIQUE ANTERIEURE

Les appareils de cuisson sous pression, en particulier à usage domestique, du genre autocuiseur, sont bien connus dans l'art antérieur comme décrit dans le document WO 2006/056253 A1.

De tels appareils comprennent généralement une cuve et un couvercle destiné à être rapporté sur la cuve pour former une enceinte de cuisson hermétiquement close au sein de laquelle sont placés les aliments à cuire.

L'intérieur de l'enceinte peut ainsi atteindre des pression et température élevées lorsque l'appareil est soumis à l'influence d'une source de chauffe.

Il existe différents moyens pour réaliser un verrouillage hermétique réversible du couvercle sur la cuve. On connaît en particulier des appareils de cuisson sous pression mettant en oeuvre :
- une cuve constituée d'un fond à partir et à la périphérie duquel s'élève une paroi latérale se terminant par un bord rentrant qui lui-même s'étend, à partir de la paroi latérale, de façon centripète vers l'intérieur de la cuve ; ledit bord rentrant délimite une ouverture d'accès à l'intérieur de la cuve et présente une face interne située en regard de l'intérieur de la cuve ;
- et un couvercle destiné à être introduit à l'intérieur de la cuve, sous la face interne du bord rentrant, pour venir ensuite être hermétiquement plaqué contre ladite face interne, réalisant ainsi avec la cuve une enceinte de cuisson étanche.

De tels appareils sont habituellement désignés dans le domaine technique sous l'appellation *« autocuiseurs à couvercle rentrant* », dans la mesure où ils mettent en oeuvre un couvercle qui doit d'abord être rentré dans la cuve avant de venir en contact étanche avec le rebord supérieur centripète de cette dernière.

Il existe de surcroît différentes technologies d'autocuiseurs à couvercle rentrant.

On connaît ainsi les autocuiseurs « *à trou d'homme* », qui mettent en oeuvre d'une part une cuve dont le bord supérieur rentrant délimite une ouverture ovale et d'autre part un couvercle de forme conjuguée ovale. Cette conjugaison de formes ovales permet d'introduire entièrement le couvercle à l'intérieur de la cuve, puis, une fois qu'il est positionné sous le bord rentrant centripète, de l'aligner avec l'ouverture de cuve pour qu'il vienne se plaquer de manière étanche contre ledit bord rentrant.

La conception de ces appareils « *à trou d'homme »* interdit bien entendu par nature l'utilisation de couvercles circulaires.

Il existe toutefois des autocuiseurs à couvercle rentrant permettant la mise en oeuvre de couvercles circulaires. Ces appareils sont généralement connus sous l'appellation *« autocuiseurs à couvercle flexible* ». Ces appareils sont basés sur le principe de l'utilisation d'un couvercle capable de passer, sous l'effet d'une sollicitation mécanique en flexion, d'une configuration géométrique de repos permettant l'introduction du couvercle dans la cuve, à une configuration géométrique déformée permettant de réaliser la fermeture hermétique de la cuve.

On connaît ainsi un autocuiseur à couvercle flexible comprenant une cuve dont le bord rentrant délimite une ouverture de cuve circulaire et un couvercle obtenu à partir d'un flan métallique circulaire roulé.

Dans sa configuration de repos, le couvercle présente une forme de disque *« roulé* », c'est à dire cintré, qui lui permet d'être introduit au sein de la cuve sous le bord rentrant.

Dans sa configuration déformée le couvercle présente une forme de disque sensiblement plat, qui lui permet de venir en appui continu et uniforme contre la face interne du bord rentrant, de façon à former une enceinte étanche. A cet effet, le bord rentrant de la cuve est équipé, dans la zone de contact avec le couvercle, d'un joint d'étanchéité annulaire. Cet appareil à couvercle flexible connu est également doté d'un moyen de commande du déplacement du couvercle, comprenant un levier monté pivotant entre une position d'ouverture et une position de fermeture sur un support solidaire d'un étrier, ledit étrier étant lui-même destiné à venir en appui contre la cuve, à l'extérieur de cette dernière, au dessus du bord rentrant centripète.

Le levier est relié au couvercle par l'intermédiaire d'une biellette permettant d'exercer un effort de traction sur le centre du couvercle.

Le fonctionnement de cet autocuiseur connu est le suivant.

Le couvercle, dans sa configuration de repos, est introduit à l'intérieur de la cuve sous le bord rentrant de cette dernière, tandis que l'étrier vient en appui sur et contre la cuve, au dessus dudit bord rentrant. L'utilisateur actionne alors le levier en rotation de sa position d'ouverture à sa position de fermeture, ce qui a pour effet d'exercer sur le centre du couvercle, par l'intermédiaire de la biellette, un effort de rapprochement du couvercle et de l'étrier, ce dernier restant fixe en position. Le couvercle vient alors en appui contre et sous le bord rentrant de la cuve et se déforme ensuite en flexion jusqu'à atteindre sa configuration déformée, dans laquelle sa périphérie est uniformément plaquée contre le bord rentrant de la cuve, ce qui permet de réaliser une enceinte de cuisson étanche. A cet instant le levier se trouve dans sa position de fermeture. Grâce à l'agencement de la biellette relativement à l'axe de rotation du levier, cette position de fermeture est stable malgré l'effort de rappel élastique exercé par le couvercle. L'utilisateur soumet ensuite l'enceinte de cuisson étanche ainsi formée à une source de chaleur, de manière à augmenter la température et la pression régnant au sein de l'enceinte et cuire les aliments présents dans l'enceinte sous pression de vapeur.

Cet appareil de l'art antérieur, s'il donne généralement satisfaction, n'en présente pas moins un certain nombre d'inconvénients.

Plus particulièrement, ces inconvénients trouvent leur source dans la liaison mécanique à biellette établie entre le couvercle et le levier.

En effet, si cette liaison permet une démultiplication de l'effort facilitant la fermeture du couvercle, elle favorise également, de façon réciproque, un retour violent du levier dans sa position d'ouverture à partir de sa position de fermeture, sous l'effet de l'effort de retour élastique exercé en permanence par le couvercle lorsqu'il se trouve dans sa configuration déformée.

Cet effet de retour violent se manifeste dès que l'utilisateur éloigne légèrement le levier de sa position stable de fermeture, en direction de la position d'ouverture.

Cet effet de retour violent constitue bien entendu une source de désagréments, et même de danger pour l'utilisateur, avec un risque pour ce dernier d'être heurté violemment par le levier.

Pour remédier à ce problème, il est connu de pourvoir le levier d'épaulements destinés à venir en contact avec le support sur lequel est monté en rotation le levier, pour arrêter ce dernier dans sa course.

Une telle mesure technique présente toutefois une fiabilité limitée et peut être délicate à mettre en oeuvre de façon industrielle, compte tenu des tolérances de fabrication et d'assemblage du sous-ensemble support / levier.

Une telle mesure technique, si elle vise à apporter une certaine sécurité à l'utilisateur en ce qui concerne la course du levier de sa position de fermeture à sa position d'ouverture, introduit en outre une gêne supplémentaire pour l'utilisateur lorsque ce dernier actionne le levier de sa position d'ouverture à sa position de fermeture.

En effet, l'utilisateur devra exercer un effort de fermeture supplémentaire pour vaincre la résistance générée par le contact de l'épaulement du levier contre le support.

En d'autres termes, les mesures de protection contre le retour violent du levier mis en oeuvre dans l'art antérieur dégradent la facilité de fermeture recherchée et obtenue par la mise en oeuvre du système de transmission d'effort à biellette.

En outre, la fermeture du couvercle pour obtenir une enceinte de cuisson étanche demande à l'utilisateur d'exercer sur le levier rotatif un effort qui se met à croître de manière significative lorsque le couvercle entame sa déformation en flexion. Plus précisément, l'effort exercé par l'utilisateur correspond dans un premier temps à l'effort nécessaire pour surmonter le poids du couvercle et amener ce dernier en appui contre et sous le bord rentrant de la cuve. Une fois le couvercle en appui contre et sous le bord rentrant, l'effort exercé par l'utilisateur est utilisé pour déformer en flexion le couvercle, à l'encontre de la réaction élastique (mémoire de forme) exercée par ce dernier. Cette réaction élastique est supérieure au poids du couvercle, de sorte que l'utilisateur doit exercer, à partir du moment où le couvercle vient en appui contre et sous le bord rentrant de la cuve, un effort supérieur à celui qu'il avait exercé pour soulever le couvercle jusqu'à l'amener en appui contre le bord rentrant.

L'utilisateur perçoit donc une difficulté à faire pivoter le levier pour amener le couvercle en position de verrouillage, dans la mesure où il doit accroître son effort sur le levier, vers la fin de course de ce dernier, pour achever le verrouillage étanche de l'enceinte.

Cet accroissement de l'effort, qui découle nécessairement du système de transmission d'effort à biellette mis en oeuvre dans ces appareils connus, va à l'encontre de l'ergonomie et du confort d'utilisation que les consommateurs attendent d'un tel appareil de cuisson.

### EXPOSE DE L'INVENTION

Les objets assignés à la présente invention visent en conséquence à remédier aux différents inconvénients énumérés précédemment et à proposer un nouvel appareil de cuisson sous pression à couvercle rentrant dont la conception permet de façon très simple et économique d'améliorer le niveau de sécurité et la facilité d'utilisation de l'appareil.

Un autre objet de l'invention vise à proposer un nouvel appareil de cuisson sous pression à couvercle rentrant, en particulier déformable, dont le fonctionnement repose sur des principes mécaniques très simples.

Un autre objet de l'invention vise à proposer un nouvel appareil de cuisson sous pression à couvercle rentrant, en particulier déformable, de construction particulièrement compacte, fiable et bon marché.

Un autre objet de l'invention vise à proposer un nouvel appareil de cuisson sous pression à couvercle rentrant, en particulier déformable, permettant de prémunir l'utilisateur contre un retour violent du moyen de commande dans sa position d'ouverture, de façon particulièrement simple et efficace.

Un autre objet de l'invention vise à proposer un nouvel appareil de cuisson sous pression à couvercle rentrant, en particulier déformable, dont la construction et le fonctionnement reposent sur un principe général de conception éprouvé tout en étant facile à industrialiser.

Un autre objet de l'invention vise à proposer un nouvel appareil de cuisson sous pression à couvercles rentrant, en particulier déformable, permettant de réduire l'effort à exercer par l'utilisateur sur le moyen de commande en fin de course de ce dernier, lors de la fermeture du couvercle, pour compenser l'effort supplémentaire de retour élastique introduit par la déformation du couvercle.

Les objets assignés à l'invention sont atteints à l'aide d'un appareil de cuisson sous pression à couvercle rentrant comprenant au moins :
- une cuve et un couvercle conçu pour être rapporté dans la cuve avec une faculté de mobilité entre au moins d'une part une position de fermeture dans laquelle il forme avec la cuve une enceinte de cuisson sensiblement étanche, et d'autre part une position d'ouverture dans laquelle il permet la communication de l'intérieur de l'enceinte avec l'extérieur,
- un moyen de commande du déplacement du couvercle entre ses positions de fermeture et d'ouverture, le couvercle étant suspendu au moyen de commandé en une zone d'accrochage,
ledit appareil étant caractérisé en ce que la zone d'accrochage est mobile relativement au moyen de commande ladite zone d'accrochage (P) étant liée au moyen de commande avec au moins un degré de liberté en translation.

### DESCRIPTIF SOMMAIRE DES DESSINS

D'autres objets et avantages particuliers de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue en perspective, un appareil de cuisson à couvercle flexible conforme à l'invention avec son moyen de commande du déplacement du couvercle dans une première position, correspondant à la fermeture verrouillée du couvercle.
- La figure 2 illustre, selon une vue schématique en coupe, l'appareil de cuisson de la figure 1.
- La figure 3 illustre, selon une vue schématique en coupe, l'appareil de cuisson des figures 1 et 2 avec son moyen de commande du déplacement du couvercle qui se trouve dans une troisième position permettant le déverrouillage du couvercle.
- La figure 4 illustre, selon une vue schématique en coupe, l'appareil de cuisson de la figure 3, le verrou du moyen de commande du déplacement du couvercle étant désactivé.
- La figure 5 illustre, selon une vue schématique en coupe, l'appareil de cuisson des figures 1 à 4 avec son moyen de commande du déplacement du couvercle qui se trouve dans une première position intermédiaire instable.
- La figure 6 illustre, selon une vue schématique en coupe, l'appareil de cuisson des figures 1 à 5 avec son moyen de commande du déplacement du couvercle qui se trouve dans une deuxième position intermédiaire instable.
- La figure 7 illustre, selon une vue schématique en coupe, l'appareil de cuisson des figures 1 à 6 avec son moyen de commande du déplacement du couvercle qui se trouve dans une position intermédiaire d'arrêt stable.
- La figure 8 illustre, selon une vue schématique en coupe, l'appareil de cuisson des figures 1 à 7 avec son moyen de commande du déplacement du couvercle qui se trouve dans une deuxième position correspondant à l'ouverture du couvercle.
- La figure 9 illustre, selon une vue schématique en perspective, l'appareil de cuisson de la figure 8.
- La figure 10 illustre, selon une vue schématique en perspective, le couvercle de l'appareil illustré aux figures précédentes sur lequel est rapporté et fixé un sous-ensemble mécanique incorporant le moyen de commande du déplacement du couvercle.
- La figure 11 représente, selon une vue éclatée, le sous-ensemble mécanique illustré notamment à la figure 10.

### MEILLEURE MANIERE DE REALISER L'INVENTION

L'appareil de cuisson sous pression 1 conforme à l'invention est destiné à assurer la cuisson d'aliments, sous pression de vapeur. De façon préférentielle, l'appareil de cuisson sous pression 1 est constitué par un appareil de cuisson sous pression domestique, conçu pour une utilisation dans un contexte familial.

Par souci de simplicité de description, il sera exclusivement fait référence dans ce qui suit, en relation avec les dessins annexés, à un appareil 1 constitué par un tel autocuiseur domestique, étant entendu que l'invention peut toutefois également concerner des appareils de type professionnel ou semi-professionnel.

Conformément à l'invention, l'appareil 1 comprend au moins une cuve 2 qui forme un récipient de cuisson, c'est-à-dire que ladite cuve 2 est destinée à accueillir les aliments soit directement, soit par l'intermédiaire d'un panier de cuisson (non représenté) inséré dans la cuve 2 et contenant lesdits aliments. La cuve 2 présente par exemple, tel que cela est illustré aux figures, une symétrie de révolution selon un axe X-X'. Dans ce qui suit, l'adjectif « axial » se réfère à la direction de cet axe de symétrie X-X', direction qui s'apparente à la direction verticale lorsque l'appareil 1 est en fonctionnement anormal. Bien évidemment, la cuve 2 peut tout à fait ne pas affecter une forme de révolution (et être par exemple de forme ovale), sans pour autant que l'on sorte du cadre de l'invention.

Conformément à l'invention, l'appareil de cuisson sous pression 1 comporte également au moins un couvercle 3 destiné à coopérer avec la cuve 2 pour former avec cette dernière une enceinte de cuisson.

Selon l'invention, l'appareil de cuisson 1 est un appareil à couvercle rentrant. Cela signifie que pour former, à l'aide de la cuve 2 et du couvercle 3, une enceinte étanche de cuisson, il est nécessaire d'introduire tout d'abord entièrement le couvercle 3 à l'intérieur de la cuve 2, sous le bord libre supérieur de cette dernière, ledit bord libre délimitant l'ouverture d'accès à l'intérieur de la cuve 2, puis d'imprimer audit couvercle 3 un mouvement vertical de bas en haut pour que le couvercle 3 vienne en appui étanche contre et sous ledit bord libre supérieur, pour obtenir une enceinte de cuisson hermétiquement close.

Ce principe général sous-tendant la construction et le fonctionnement des appareils de cuisson, sous pression à couvercle rentrant est bien connu en tant que tel.

La cuve 2 est de manière classique fabriquée à partir d'un matériau métallique tel que de l'acide inoxydable ou de l'aluminium, et comporte un fond 2A qui affecte par exemple une forme discoïde et est éventuellement pourvu d'un assemblage composite thermo-conducteur, rapporté par exemple par frappe à chaud. Comme illustré aux figures, la cuve 2 comporte une paroi latérale 2B qui, de préférence, présente une forme annulaire et s'élève à partir et à la périphérie du fond 2A. Un bord rentrant 2C s'étend de façon centripète à partir de la paroi latérale 2B. Ce bord rentrant 2C présente une face interne 20C située en regard de l'intérieur de la cuve 2, c'est à dire orientée vers le fond 2A.

De préférence, tel que cela est illustré aux figures, la paroi latérale 2B s'étend entre une extrémité inférieure 20B reliée à la périphérie du fond 2A et une extrémité supérieure 21B prolongée par le bord rentrant 2C, lequel converge radialement vers le centre de la cuve 2, c'est à dire en direction de l'axe X-X'. De préférence, le bord rentrant 2C comprend un tronçon sensiblement conique 21C qui s'étend dans le prolongement de la paroi latérale 28, ledit tronçon conique 21C se terminant par un bord roulé 22C ménageant un logement destiné à accueillir un joint d'étanchéité annulaire 4, lequel vient habiller la face interne 20C du bord rentrant 2C. Le bord rentrant centripète 2C délimite une ouverture d'accès à l'intérieur de la cuve 2, par laquelle peuvent être introduits non seulement les aliments à cuire, mais également le couvercle 3.

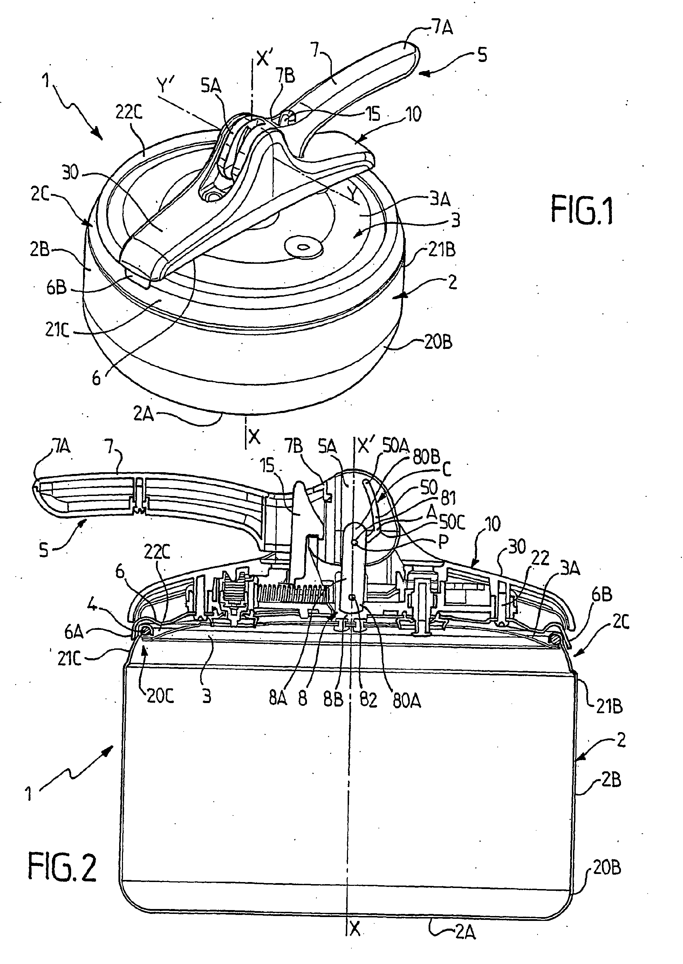

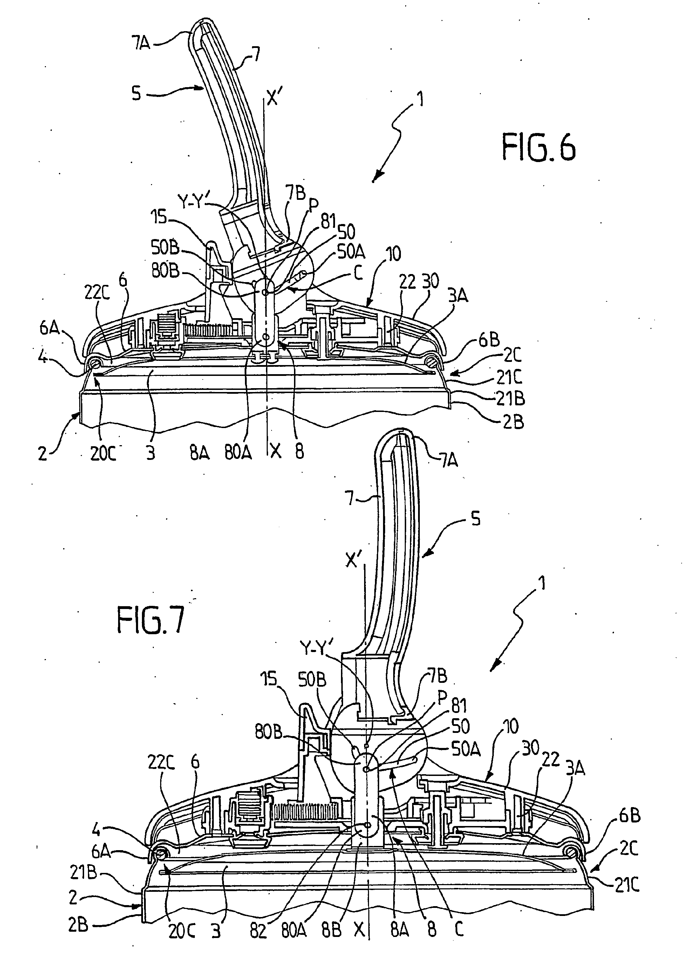

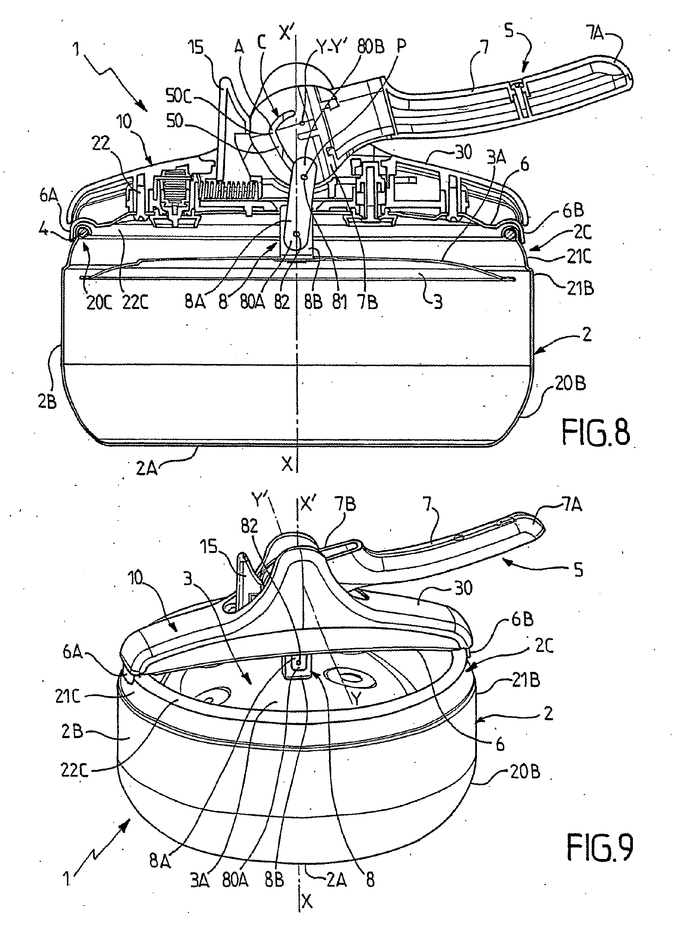

Conformément à l'invention, le couvercle 3 est conçu pour être rapporté dans la cuve 2 avec une faculté de mobilité entre au moins :
- d'une part au moins une position de fermeture (illustrée aux figures 1 et 2) dans laquelle il forme avec la cuve 2 une enceinte de cuisson sensiblement étanche, c'est à dire suffisamment hermétique pour permettre une montée en pression en son sein ; il est tout à fait envisageable que le couvercle 3 puisse atteindre une pluralité de positions de fermeture distinctes dans lesquelles il forme avec la cuve 2 une enceinte de cuisson étanche ;
- et d'autre part au moins une position d'ouverture (illustrée aux figures 8 et 9), dans laquelle il permet la communication de l'intérieur de l'enceinte avec l'extérieur, de façon à ce que la pression régnant dans l'enceinte corresponde sensiblement à la pression atmosphérique ; il est tout à fait envisageable, comme cela est d'ailleurs le cas pour la variante illustrée aux figures (les figures 6 et 7 illustrent respectivement des positions d'ouvertures différentes, la position de la figure 8 étant une position stable de butée correspondant à l'ouverture complète de l'enceinte), que le couvercle 3 puisse atteindre une pluralité de positions d'ouverture distinctes dans lesquelles il forme avec la cuve 2 une enceinte de cuisson ouverte.

En d'autres termes, conformément à l'invention, le couvercle 3 peut rapporté dans la cuve 2, c'est à dire être inséré à l'intérieur de cette dernière, selon un positionnement prédéterminé, positionnement dans lequel il conserve une possibilité de se déplacer de façon contrôlé entre ses positions de fermeture et d'ouverture.

Dans le mode de réalisation illustré aux figures, lorsque le couvercle 3 se trouve en position de fermeture, il vient en contact sensiblement étanche, par sa face supérieure 3A, contre la face interne 20C du bord rentrant 2C.

Au contraire, lorsque le couvercle 3 se trouve en position d'ouverture, il se trouve à distance du bord rentrant 2C, empêchant ainsi toute montée en pression de l'enceinte. Le passage de la position d'ouverture à la position de fermeture (et vice versa) s'effectue préférentiellement par un mouvement de translation verticale du couvercle 3 de bas en haut (respectivement de haut en bas).

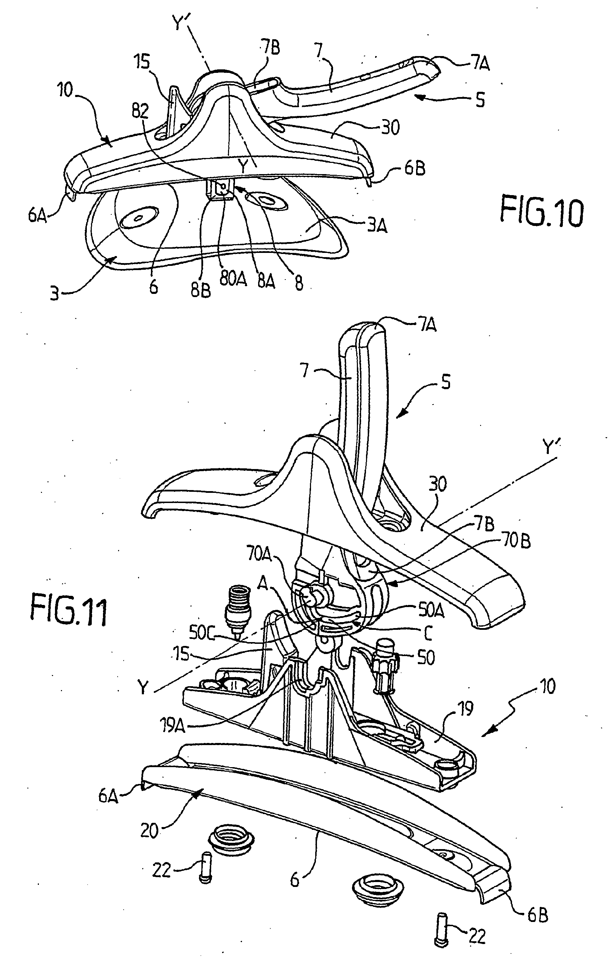

Afin de rapporter le couvercle 3 dans la cuve 2, l'appareil 1 conforme à l'invention comprend avantageusement un sous-ensemble 10 (illustré seul sur la figure 11) relié mécaniquement au couvercle 3, ledit sous-ensemble 10 étant destiné à venir reposer en appui contre et sur la cuve 2. Le couvercle 3 est monté mobile relativement au sous-ensemble 10 entre deux positions extrêmes qui, lorsque le sous-ensemble 10 repose de façon fixe et immobile contre le bord de cuve 22C (tel qu'illustré par exemple à la figure 1), correspondent respectivement aux positions d'ouverture et de fermeture. Au sens de l'invention, on considère donc que le couvercle 3 est rapporté dans la cuve 2 lorsqu'une pièce d'accostage (formée en l'occurrence par le sous-ensemble 10) reliée au couvercle 3 vient s'immobiliser en appui contre la cuve 2, le couvercle 3 se trouvant alors prépositionné au sein de la cuve 2, sous le bord rentrant 2C, avec une possibilité de se déplacer relativement à ladite pièce d'accostage et à la cuve.

Dans ce qui suit, on s'attachera exclusivement, pour des raisons de simplicité de description, à décrire un autocuiseur à couvercle rentrant pourvu d'un couvercle 3 déformable, c'est-à-dire dont la forme peut être modifiée par application d'une sollicitation mécanique commandée par l'utilisateur.

L'invention n'est toutefois pas limitée à un type particulier d'autocuiseur à couvercle rentrant, et son enseignement s'applique également pleinement à d'autres types d'autocuiseurs à couvercle rentrant, et notamment aux autocuiseurs à trou d'homme.

Conformément au mode de réalisation illustré aux figures, le couvercle 3 est donc un couvercle déformable susceptible d'évoluer entre d'une part une configuration géométrique de repos (illustrée à la figure 10) correspondant à sa position d'ouverture et permettant l'introduction du couvercle 3 dans la cuve 2 sous la face interne 20C du bord rentrant 2C et d'autre part une configuration géométrique déformée (représentée aux figures 1 et 2) correspondant à sa position de fermeture et permettant au couvercle de venir en contact sensiblement étanche contre la face interne 20C du bord rentrant 2C, cette dernière étant préférentiellement habillée par le joint d'étanchéité 4.

Afin de permettre à l'utilisateur d'ouvrir et fermer à volonté l'enceinte de cuisson, le couvercle 3 est préférentiellement un couvercle déformable de façon réversible. Cela signifie que le couvercle 3 est réalisé dans un matériau élastique et est sollicité en déformation à l'intérieur du domaine élastique dudit matériau. De façon préférentielle, le couvercle 3 est un couvercle flexible, c'est-à-dire qu'il est conçu pour changer de forme sous l'effet d'une sollicitation mécanique en flexion. Par exemple, tel que cela est bien connu en tant que tel dans l'art antérieur, le couvercle 3 est constitué d'un flan métallique discoïde qui a subi un roulage de telle sorte qu'il affecte au repos, en l'absence de sollicitation mécanique extérieure de déformation, une forme de selle, c'est à dire une forme courbe sensiblement en U (par exemple visible sur les figures 9 et 10). En d'autres termes, le couvercle 3 présente avantageusement au repos (en l'absence de sollicitation de déformation) une forme de disque cintré, qui correspond en vue de dessus à une ellipse.

Grâce à cette forme gauche, ledit couvercle 3 peut être inséré à l'intérieur de la cuve 2 à travers l'orifice délimité par le bord rentrant 2C, alors que le diamètre du flan discoïde (avant cintrage) à partir duquel est constitué le couvercle 3 est supérieur à celui de l'ouverture de cuve 2. La figure 9 représente notamment le couvercle 3 alors qu'il est inséré à l'intérieur de la cuve 2, sous le bord rentrant 2C.

Conformément à l'invention, l'appareil de cuisson sous pression 1 comprend également un moyen de commande 5 du déplacement du couvercle 3 entre ses positions de fermeture et d'ouverture. Le moyen de commande 5 est un moyen mobile de commande du déplacement du couvercle 3, conçu pour être déplacé (de préférence en rotation sur lui-même) manuellement par l'utilisateur. Le déplacement du moyen de commande entraîne quant à lui le déplacement du couvercle 3 entre ses positions d'ouverture et de fermeture. Avantageusement, le moyen de commande 5 est monté mobile entre au moins une première position (illustrée notamment aux figures 1 et 2) correspondant à la position de fermeture du couvercle 3 et une deuxième position (illustrée notamment aux figures 8 et 9) correspondant à la position d'ouverture du couvercle 3. Par exemple, dans le mode de réalisation illustré aux figures, le moyen de commande 5 du déplacement du couvercle 3 est conçu pour exercer un effort sensiblement vertical, selon l'axe X-X', ledit effort étant préférentiellement appliqué au centre du couvercle 3 et permettant de faire passer le couvercle 3 :
- de sa position d'ouverture (illustrée aux figures 8 et 9) à sa position de fermeture (illustrée aux figures 1 et 2) par traction verticale du bas vers le haut,
- et inversement, de sa position de fermeture (illustrée aux figures 1 et 2) à sa position d'ouverture (illustrée aux figures 8 et 9) par relâchement de l'effort de traction exercé, le couvercle 3 retournant en position d'ouverture sous les effets conjugués de son retour élastique et de son propre poids ; le moyen de commande 5 est ainsi notamment soumis à une force de rappel (effet ressort) exercée par le couvercle 3 (lorsque ce dernier se trouve en configuration déformée) entraînant ledit moyen de commande 5 vers sa deuxième position.

Dans le cas, illustré aux figures, d'un autocuiseur 1 à couvercle flexible, le moyen de commande 5 exerce une double fonction, savoir une fonction de commande du déplacement du couvercle 3 et une fonction de commande de la déformation (en flexion) du couvercle 3, ces fonctions intervenant successivement.

En effet, sous l'effet de l'effort de traction verticale exercé par le moyen de commande 5 au niveau du centre du couvercle 3, selon des modalités qui vont être expliquées plus en détails dans ce qui suit, le couvercle 3 va tout d'abord se déplacer globalement selon un trajet vertical parallèle à l'axe X-X' jusqu'à venir en butée, vers sa périphérie, contre le bord rentrant 2C, lequel est habillé sur sa face interne 20C par le joint annulaire d'étanchéité 4. L'effort de traction du bas vers le haut exercé par le moyen de commande 5 est alors poursuivi tandis que le couvercle 3 est en appui contre le bord rentrant 2C (par l'intermédiaire du joint d'étanchéité 4 interposé entre la face supérieure du couvercle 3 et la face inférieure 20C du bord rentrant 2C), ce qui occasionne alors une déformation élastique en flexion du couvercle 3. Cette déformation conduit le couvercle 3 à adopter une forme de disque sensiblement plat (et non plus cintré), forme lui permettant d'épouser de façon sensiblement uniforme et continue, sur sensiblement toute sa périphérie, le bord rentrant 2C. On obtient ainsi une enceinte de cuisson suffisamment étanche pour permettre la cuisson des aliments à une pression supérieure à la pression atmosphérique. En d'autres termes, dans le mode de réalisation illustré aux figures, le moyen de commande 5 du déplacement du couvercle 3 commande non seulement le déplacement proprement dit du couvercle 3 mais également le passage dudit couvercle de sa configuration géométrique de repos à sa configuration géométrique déformée et vice versa. Le passage d'une configuration géométrique à l'autre est donc commandée par le moyen de commande 5 du déplacement du couvercle 3.

Conformément à l'invention, le couvercle 3 est suspendu au moyen de commande 5 en une zone d'accrochage P. Cela signifie que le couvercle 3 est attaché au moyen de commande 5, la zone d'attache du couvercle 3 sur le moyen de commande 5 correspondant à la zone d'accrochage P.

Au sens de l'invention, la zone d'accrochage P correspond au point d'application de la force exercée par le poids du couvercle 3 sur le moyen de commande 5, lorsque le couvercle 3 est rapporté dans la cuve 2.

De préférence, la zone d'accrochage P présente un caractère ponctuel, c'est à dire que la zone d'accrochage P correspond dans ce cas à un point d'accrochage P (tel qu'illustré aux figures).

Il est cependant tout à fait envisageable que la zone d'accrochage P comporte plusieurs points d'accrochage, ladite zone d'accrochage P pouvant de surcroît présenter un caractère discret (points d'accrochage séparés les uns des autres) ou continu (zone d'accrochage bi-dimensionnelle ou tridimensionnelle).

Le moyen de commande 5, lorsqu'il est déplacé par l'utilisateur, est ainsi conçu pour transmettre un effort de déplacement au couvercle 3 qui est suspendu au moyen de commande 5 au niveau de la zone d'accrochage P.

Conformément à l'invention, la zone d'accrochage P est mobile relativement au moyen de commande 5. En d'autres termes, le couvercle 3 est relié au moyen de commande 5 d'une manière permettant à la zone d'accrochage P d'être déplacée relativement au moyen de commande 5, de sorte que le positionnement relatif de la zone d'accrochage P et du moyen de commande 5 est variable.

Cette mobilité de la zone d'accrochage P relativement au moyen de commande 5 permet de résoudre de façon particulièrement simple et efficace un certain nombre de problèmes techniques rencontrés dans les appareils de l'art antérieur, comme cela ressortira plus en détails de la description qui suit.

Au sens de l'invention, le caractère mobile de la zone d'accrochage P correspond pour cette dernière à une faculté de modifier non seulement son orientation, mais également son positionnement relativement au moyen de commande 5.

A cet effet, la zone d'accrochage P est liée au moyen de commande 5 avec au moins un degré de liberté en translation. Cela signifie que si la zone d'accrochage P est effectivement solidaire du moyen de commande 5, la liaison de la zone d'accrochage P audit moyen de commande 5 autorise un déplacement relatif en translation de la zone d'accrochage P et du moyen de commande 5.

Avantageusement, la zone d'accrochage P est capable de se déplacer relativement au moyen de commande 5 selon un chemin de guidage C ménagé dans ledit moyen de commande 5. Cela signifie que le déplacement de la zone d'accrochage P relativement au moyen de commande 5 s'effectue selon une trajectoire prédéterminée définie par le chemin de guidage C.

De préférence, le chemin de guidage C présente une zone d'arrêt A conformée pour arrêter le déplacement de la zone d'accrochage P relativement au chemin de guidage C lorsque ledit déplacement est provoqué par la force de rappel exercée par le couvercle 2, de façon à empêcher ainsi le moyen de commande 5 de rejoindre sa deuxième position sous l'effet de cette force de rappel.

Ainsi, le moyen de commande 5 est empêché de rejoindre brutalement et directement sa deuxième position (correspondant à l'ouverture complète du couvercle 3) à partir de sa première position sous l'effet de la force de rappel, grâce à la seule conformation du chemin de guidage C. La conformation du chemin C permet de positionner la zone d'accrochage P relativement au reste de l'appareil 1 pour sensiblement arrêter le mouvement de la zone d'accrochage P relativement au moyen de commande 5 et ainsi interrompre la course dudit moyen de commande 5, sans qu'il ne soit nécessaire d'utiliser des moyens mécaniques externes de freinage comme dans l'art antérieur.

L'un des intérêts du principe général sous-tendant l'invention (mobilité de la zone d'accrochage P relativement au moyen de commande 5) réside donc dans la possibilité de réaliser de manière simple et efficace une fonction d'arrêt du mouvement du moyen de commande 5 lorsque ce dernier est rappelé vers sa deuxième position par la force de retour élastique exercée par le couvercle 3.

Avantageusement, la zone d'arrêt A est conformée et positionnée dans le chemin de guidage C pour que lorsque la zone d'accrochage P se trouve dans ladite zone d'arrêt A, le moyen de commande 5 se trouve dans une position intermédiaire stable située entre sa première et sa deuxième positions, tel qu'illustré à la figure 7.

Cette caractéristique technique permet de garantir que le moyen de commande 5, lorsqu'il est rappelé dans sa deuxième position par l'effet ressort du couvercle 3, n'effectuera pas une course complète jusqu'à atteindre sa deuxième position, mais s'arrêtera nécessairement avant sa deuxième position dans une position intermédiaire stable correspondant au positionnement de la zone d'accrochage P dans la zone d'arrêt A.

Avantageusement, le chemin de guidage C est conformé pour que la zone d'accrochage P se trouve elle-même dans une position d'équilibre stable lorsqu'elle est positionnée dans la zone d'arrêt A. Cela signifie que même si la zone d'accrochage P s'éloigne légèrement de la zone d'arrêt A, elle sera naturellement ramenée dans la zone d'arrêt A qui correspond pour la zone d'accrochage P à une position d'équilibre stable.

Avantageusement, le chemin de guidage C s'étend selon une trajectoire présentant une inflexion 50C, ladite inflexion 50C formant la zone d'arrêt A. En d'autres termes, le chemin de guidage C présente deux tronçons d'orientations différentes, séparés par un point d'inflexion 50C marquant le changement d'orientation opéré par la trajectoire du chemin de guidage C.

Lorsque la zone d'accrochage P se trouve positionnée sur le chemin de guidage C au niveau du point d'inflexion 50C, ladite zone d'accrochage P, tout comme le moyen de commande 5, se trouve alors immobilisée, en équilibre stable.

Cet équilibre peut néanmoins être rompu manuellement par l'utilisateur, en exerçant une action de déplacement sur le moyen de commande 5 pour forcer ce dernier à atteindre sa deuxième position, qui est elle aussi une position stable.

Conformément à la variante de réalisation illustrée aux figures, le moyen de commande 5 du déplacement du couvercle 3 comprend au moins une pièce de transmission d'effort 5A montée mobile à rotation selon un premier axe Y-Y', lequel s'étend préférentiellement, tel que cela est illustré aux figures, perpendiculairement à l'axe X-X', selon la direction horizontale.

De préférence, le couvercle 3 est suspendu à la pièce de transmission d'effort 5A en une zone correspondant à la zone d'accrochage P. En d'autres termes, le couvercle 3 est suspendu à la pièce de transmission d'effort 5A (laquelle fait partie du moyen de commande 5) en la zone d'accrochage (P). Cela signifie que le couvercle 3 est attaché à la pièce de transmission d'effort 5A, la zone d'attache du couvercle 3 sur la pièce 5A correspondant à la zone d'accrochage P.

Selon l'exemple de réalisation préférentiel illustré aux figures, l'appareil 1 comprend un étrier 6 formant pièce d'accostage avec la cuve 2, ledit étrier 6 étant destiné à venir en appui sur la cuve 2, et plus précisément sur le bord rentrant 2C, contre la face externe de ce dernier. L'étrier 6 est ainsi conçu pour être disposé en travers de l'ouverture de la cuve 2, de manière à venir en appui externe sur le bord rentrant 2C, en deux régions diamétralement opposées, tel que cela est illustré aux figures.

L'étrier 6, qui est avantageusement incorporé dans le sous-ensemble 10, est préférentiellement formé d'une plaque métallique allongée s'étendant longitudinalement entre deux extrémités opposées pourvues chacune d'un bord tombant respectif 6A, 6B permettant d'assurer un positionnement correct, centré, de l'étrier 6 sur la cuve 2.

Au sens de l'invention, on considère que le couvercle 3 est rapporté dans la cuve 2 lorsque l'étrier 6 (ou tout autre moyen équivalent) repose sur et au-dessus de la cuve 2, en prenant appui sur le bord supérieur (formé ici par le bord rentrant 2C) dé la cuve 2 tel qu'illustré par exemple à la figure 1.

Le moyen de commande 5 du déplacement du couvercle 3 comprend de façon avantageuse un levier 7 mobile conçu pour être actionné manuellement par l'utilisateur. Ce levier 7 actionnable manuellement est avantageusement monté mobile relativement à l'étrier 6, au sein du sous-ensemble 10. De préférence, le levier 7 est monté à pivotement relativement à l'étrier 6 selon le premier axe Y-Y' entre au moins d'une part une première position (illustrée aux figures 1 et 2) correspondant à la première position du moyen de commande 5 et à la position de fermeture du couvercle 3, et d'autre part une deuxième position (illustrée aux figures 8 et 9) correspondant à la deuxième position du moyen de commande 5 et à la position d'ouverture du couvercle 3.

De préférence, la pièce de transmission d'effort 5A est solidaire du levier 7 et, de manière encore plus préférentielle (comme illustré aux figures) vient de matière avec ledit levier 7. En d'autres termes, selon ce mode de réalisation préférentiel, le levier 7 et la pièce de transmission d'effort 5A forment une seule et même pièce d'un seul tenant, réalisée par exemple par moulage de matière plastique. Dans ce cas, le levier 7 s'étend entre une extrémité libre 7A destinée à être saisie manuellement par l'utilisateur et une extrémité opposée 7B à partir de laquelle s'étend la pièce 5A, ladite pièce 5A étant montée à rotation autour du premier axe Y-Y' relativement à l'étrier 6. La position du premier axe Y-Y' est fixe par rapport à l'étrier 6, c'est à dire que la distance entre l'étrier 6 et ledit premier axe Y-Y' est constante et ne varie pas sous l'effet de la rotation du levier 7.

De préférence, la pièce de transmission d'effort 5A est montée à rotation dans le sous-ensemble 10, selon des modalités constructives qui seront explicitées plus en détails dans ce qui suit.

Bien évidemment, l'invention n'est pas limitée à la mise en oeuvre d'une pièce de transmission d'effort 5A directement solidaire d'un levier rotatif 7. Il est par exemple tout à fait envisageable que la pièce de transmission d'effort 5A ne soit pas solidaire du levier 7, mais interagisse, par tout moyen mécanique d'entraînement connu (par exemple à l'aide d'un engrènement de roues dentées), avec ce dernier de manière à ce que le déplacement du levier 7 entraîne la rotation de la pièce de transmission 5A. L'invention n'est pas non plus limitée spécifiquement à la mise en oeuvre d'un levier 7 rotatif. Il est par exemple envisageable de mettre en oeuvre un levier 7 monté à translation et coopérant avec la pièce de transmission d'effort 5A, par l'intermédiaire d'un moyen de transformation de mouvement, pour convertir le mouvement de translation du levier 7 en un mouvement de rotation de la pièce de transmission d'effort 5A. L'invention n'est d'ailleurs pas non plus limitée à la mise en oeuvre d'une pièce de transmission d'effort 5A rotative, cette dernière pouvant se déplacer en translation par exemple, sans pour autant que l'on sorte du cadre de l'invention.

Avantageusement, la résultante des forces s'exerçant sur la zone d'accrochage (P) passe par ledit premier axe (Y-Y') lorsque la zone d'accrochage (P) se trouve dans la zone d'arrêt (A). Cela signifie que dans ce cas, la zone d'accrochage P est soumise à un effort purement vertical, selon l'axe X-X', qui maintient ladite zone d'accrochage (P) en équilibre stable dans la zone d'arrêt A.

Avantageusement, l'appareil 1 comprend un système de transmission d'effort 8 permettant d'établir une liaison mécanique entre la pièce de transmission d'effort 5A et le couvercle 3, pour que la rotation de la pièce de transmission d'effort 5A selon le premier axe Y-Y' entraîne l'exercice d'un effort de traction vers le haut sur le couvercle 3, lorsque la pièce de transmission d'effort 5A tourne dans le sens correspondant à la fermeture du couvercle 3 et réciproquement. Préférentiellement, l'appareil 1 comprend au moins une pièce de liaison 8A, constituée par exemple par une biellette, s'étendant entre une première extrémité 80A reliée au couvercle 3 et une deuxième extrémité 80B reliée à la pièce de transmission d'effort 5A en un point formant la zone d'accrochage P.

Dans le cas de la variante illustrée aux figures, le levier 7 est ainsi relié, par l'intermédiaire de la pièce de liaison 8A, au couvercle 3 (et de préférence au centre dudit couvercle 3), pour que le pivotement du levier 7 de sa deuxième vers sa première position entraîne l'exercice d'un effort de traction vers le haut sur le couvercle 3 et réciproquement.

L'invention n'est bien entendu pas limitée à la mise en oeuvre spécifique, en tant que pièce de liaison 8A, d'une biellette. Il est par exemple tout à fait envisageable que le couvercle 3 soit directement attaché à la pièce de transmission d'effort 5A, sans interposition d'une biellette.

De manière préférentielle, la deuxième extrémité 80B de la pièce de liaison 8A est pourvue d'un premier tenon 81 correspondant à la zone d'accrochage P, tandis que le moyen de commande 5 est pourvu d'une lumière de guidage 50 accueillant ledit premier tenon 81, ce dernier étant monté à glissement au sein de ladite lumière de guidage 50. De préférence, la lumière de guidage 50 est ménagée dans la pièce de transmission d'effort 5A.

De préférence, le premier tenon 81 peut ainsi se déplacer en translation à l'intérieur et le long de la lumière 50, laquelle présente un caractère longiligne et s'étend longitudinalement entre une première et une seconde extrémités 50A, 50B. Le premier tenon 81 peut ainsi circuler en translation au sein de la lumière 50 entre lesdites première et seconde extrémités 50A, 50B. Bien évidemment, la circulation du premier tenon 81 est une circulation relative par rapport à la lumière 50, cette circulation pouvant être obtenu par déplacement de la lumière 50, déplacement du tenon 81 ou déplacement des deux.

Il est également envisageable que le premier tenon 81 puisse tourner sur lui-même au sein de la lumière de guidage 50, cette fonction de pivotement permettant à la pièce de liaison 8A d'assurer correctement sa fonction de transmission d'effort, tout en permettant au couvercle 3 de conserver un positionnement correct dans la cuve 2 en vue de son interaction avec cette dernière..

De préférence, la première extrémité 80A de la pièce de liaison 8A est également pourvue d'un deuxième tenon 82 qui tourillonne dans une pièce d'attache 8B en forme de U solidarisée au couvercle 3 (et de préférence au centre de ce dernier), par exemple par rivetage.

Il est cependant tout à fait envisageable que la pièce d'attache 8B coopère directement avec la lumière 50 et forme dans ce cas la pièce de liaison, le deuxième tenon 82 correspondant alors à la zone d'accrochage P.

Avantageusement, l'appareil 1 comprend un moyen pour faire varier la distance séparant la zone d'accrochage P du premier axe Y-Y'. Grâce à cette caractéristique, il est possible de rendre également évolutif l'effort exercé par l'utilisateur sur le moyen de commande 5 pour déplacer le couvercle 3 entre ses positions de fermeture et d'ouverture.

Cela permet en particulier de compenser d'éventuelles surintensités d'effort provoquées par exemple par la déformation en flexion du couvercle 3.

Par exemple, dans le mode de réalisation illustré aux figures, cette fonction de variation de la distance est obtenue grâce au fait que la deuxième extrémité 80B de la pièce de liaison 8A est montée mobile relativement à la pièce de transmission d'effort 5A, c'est à dire que la deuxième extrémité 80B peut se déplacer relativement à la pièce de transmission d'effort 5A, tout en étant attachée à cette dernière, de façon à rapprocher ou éloigner la zone d'accrochage P de l'axe Y-Y'. Avantageusement, le moyen pour faire varier la distance entre la zone d'accrochage P et le premier axe Y-Y' est conçu pour que ladite distance diminue lors du passage du couvercle 3 de sa position d'ouverture à sa position de fermeture. Par exemple, dans le mode de réalisation illustré aux figures, cette fonction est obtenue grâce au fait que la distance séparant le premier axe Y-Y' de la première extrémité 50A de la lumière 50 est sensiblement supérieure à la distance séparant le premier axe Y-Y' de la seconde extrémité 50B de la lumière 50, le premier tenon 81 se trouvant vers la deuxième extrémité 50B lorsque le couvercle 3 est en position de fermeture et vers la première extrémité 50A lorsque le couvercle 3 est en position d'ouverture.

Cette caractéristique technique permet de compenser l'augmentation de l'effort de réaction exercé par le couvercle 3 (due par exemple à sa déformation en flexion), de manière à ne pas faire ressentir cette augmentation à l'utilisateur exerçant la force de fermeture sur le levier 7.

Le principe général sous-tendant l'invention, savoir la mise en oeuvre d'une zone d'accrochage P mobile du couvercle 3 sur le moyen de commande 5, permet ainsi de réaliser de façon particulièrement simple un moyen dynamique de réglage de l'effort à exercer par l'utilisateur pour fermer le couvercle.

De préférence, le sous-ensemble 10 comprend, tel que cela est plus particulièrement visible sur la figure 11, une platine 19, réalisée par exemple par moulage de matière plastique. Le levier 7 est avantageusement monté à pivotement sur la platine 19 par l'intermédiaire d'une fourche 19A, qui de préférence vient de matière avec la platine 19, et sur laquelle vient tourillonner le levier 7 par l'intermédiaire d'ergots 70A, 70B formant arbres de rotation pour le levier 7. La platine 19 est de préférence elle-même incluse dans un boîtier dont la base 20 est constituée par l'étrier 6 tandis que la partie supérieure est constituée par un capot 30 rapporté sur l'étrier 6 et fixé à ce dernier par l'intermédiaire de vis 22 traversant la platine 19 grâce à des passages ménagés en son sein à cet effet. L'étrier 6 est pourvu d'un orifice permettant de laisser passer la pièce de liaison 8A dont l'une des extrémités 80A est reliée au levier 7, de manière excentrée par rapport au centre de rotation dudit levier 7, tandis que l'autre extrémité 80B est assujettie au couvercle 3, par l'intermédiaire de la pièce d'attache 8B elle-même solidaire du centre du couvercle 3.

Le fonctionnement de l'appareil de cuisson 1 illustré aux figures est le suivant.

On considère que l'appareil de cuisson 1 se trouve initialement dans une configuration de fermeture, dans laquelle le moyen de commande 5 se trouve dans sa première position, tandis que le couvercle 3 ferme de manière étanche la cuve 2. Cette configuration initiale est illustrée aux figures 1 et 2. Le levier 7 est bloqué dans sa première position par un verrou 15 qui se trouve à cet instant dans une position de rappel élastique.

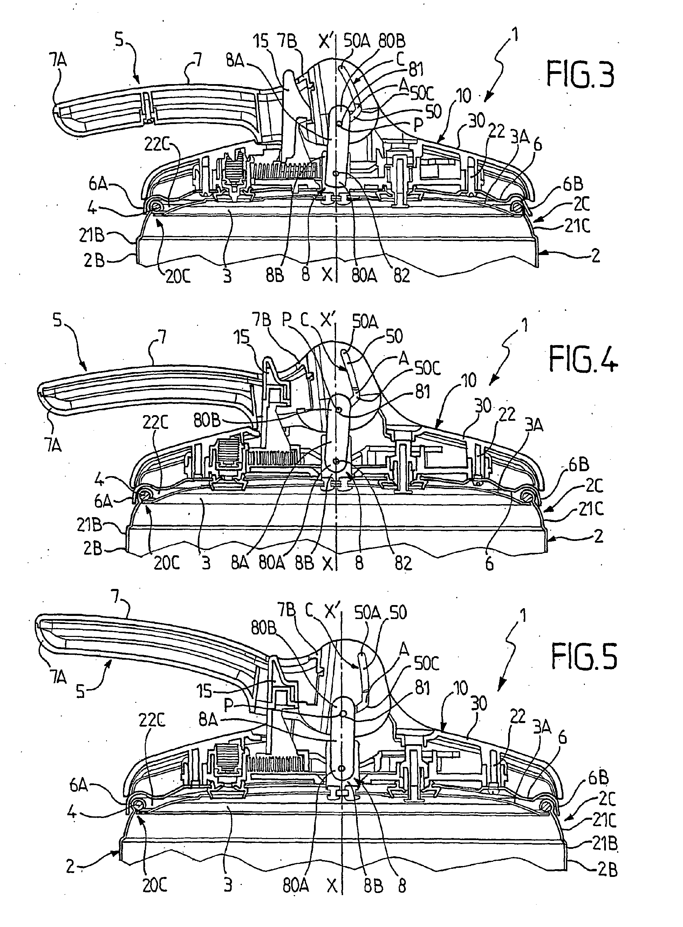

Afin d'ouvrir l'enceinte de cuisson pour accéder à l'intérieur de la cuve 2, l'utilisateur exerce un effort vertical descendant sur le levier 7, ce qui entraîne la rotation dudit levier 7 selon un sens anti-horaire (défini par rapport aux figures) jusqu'à ce que ledit levier atteigne sa troisième position, qui est une position de butée illustrée aux figures 3 et 4. Dans cette troisième position, le verrou 15 peut être désengagé manuellement par l'utilisateur, à l'encontre de la force de rappel élastique auquel il est soumis (cf. figure 4).

L'utilisateur, tout en maintenant le verrou 15 désactivé à l'encontre de sa force de rappel élastique, exerce un effort ascendant sur le levier 7, de façon à imprimer à ce dernier un mouvement en sens horaire (défini par rapport aux figures) qui amène le levier 7 dans une première position intermédiaire instable illustrée à la figure 5.

L'utilisateur poursuit ensuite son action rotative sur le levier 7 dans le sens horaire, l'effet de ressort dû à la relaxation de flexion du couvercle 3 venant s'ajouter à l'effort exercé par l'utilisateur pour entraîner le levier 7 vers sa première position. Concomitamment au déplacement du levier 7, le premier tenon 81 circule dans et relativement à la lumière 50 jusqu'à atteindre le point d'inflexion 50C.

A cet instant, tel qu'illustré à la figure 7, le levier 7 se trouve dans une position intermédiaire d'arrêt stable dans laquelle la résultante des forces exercées sur le levier 7 est purement verticale et alignée avec le centre de rotation du levier 7 et le premier tenon 81. Ainsi, même si le levier 7 est propulsé violemment par l'effet ressort du couvercle 3 en direction de sa deuxième position, il s'arrêtera nécessairement dans la position intermédiaire stable illustrée à la figure 7.

L'utilisateur n'a plus ensuite qu'à poursuivre la rotation du levier 7, à partir de la position intermédiaire d'arrêt stable, dans le sens horaire (défini relativement aux figures) pour atteindre la seconde position illustrée aux figures 8 et 9, correspondant à la position d'ouverture du couvercle 3.

Si le levier 7 dépasse légèrement sa position intermédiaire stable, la forme de la lumière 50 fait que le premier tenon 81 est automatiquement ramené au niveau du point d'inflexion 50C, ce qui permet de ramener concomitamment le levier 7 dans sa position intermédiaire, qui est donc bien une position d'équilibre stable.

### POSSIBILITE D'APPLICATION INDUSTRIELLE

L'invention trouve son application industrielle dans la conception, la fabrication et l'utilisation d'appareils de cuisson.

## Revendications

1. Appareil de cuisson sous pression (1) à couvercle rentrant comprenant au moins :
- une cuve (2) et un couvercle (3) conçu pour être rapporté dans la cuve (2) avec une faculté de mobilité entre au moins d'une part une position de fermeture dans laquelle il forme avec la cuve (2) une enceinte de cuisson sensiblement étanche, et d'autre part une position d'ouverture dans laquelle il permet la communication de l'intérieur de l'enceinte avec l'extérieur,
- un moyen de commande (5) du déplacement du couvercle (3) entre ses positions de fermeture et d'ouverture, le couvercle (3) étant suspendu au moyen de commande (5) en une zone d'accrochage (P),
ledit appareil (1) étant **caractérisé en ce que** la zone d'accrochage (P) est mobile relativement au moyen de commande (5), ladite zone d'accrochage (P) étant liée au moyen de commande (5) avec au moins un degré de liberté en translation.

2. Appareil (1) selon la revendication 1 **caractérisé en ce que** la zone d'accrochage (P) est capable de se déplacer relativement au moyen de commande (5) selon un chemin de guidage (C) ménagé dans ledit moyen de commande (5).

3. Appareil (1) selon la revendication 2 **caractérisé en ce que** le moyen de commande (5) est mobile entre au moins une première position correspondant à la position de fermeture du couvercle (3) et une deuxième position correspondant à la position d'ouverture du couvercle (3), ledit moyen de commande (5) étant soumis à une force de rappel exercée par le couvercle (3) l'entraînant vers sa deuxième position, ledit chemin de guidage (C) présentant une zone d'arrêt (A) conformée pour arrêter le déplacement de la zone d'accrochage (P) relativement au chemin de guidage (C) lorsque ledit déplacement est provoquée par ladite force de rappel, de façon à empêcher ainsi le moyen de commande (5) de rejoindre sa deuxième position sous l'effet de la force de rappel.

4. Appareil (1) selon la revendication 3 **caractérisé en ce que** la zone d'arrêt (A) est conformée et positionnée dans le chemin de guidage (C) pour que lorsque la zone d'accrochage (P) se trouve dans ladite zone d'arrêt (A), le moyen de commande (5) se trouve dans une position intermédiaire stable située entre sa première et sa deuxième position.

5. Appareil (1) selon la revendication 3 ou 4 **caractérisé en ce que** le chemin de guidage (C) s'étend selon une trajectoire présentant une inflexion (50C), ladite inflexion (50C) formant la zone d'arrêt (A).

6. Appareil (1) selon l'une des revendications 4 à 5 **caractérisé en ce que** le chemin de guidage (C) est conformé pour que la zone d'accrochage (P) se trouve dans une position d'équilibre stable lorsqu'elle est positionnée dans la zone d'arrêt (A).

7. Appareil (1) selon l'une des revendications 1 à 6 **caractérisé en ce que** le moyen de commande (5) comprend au moins une pièce de transmission d'effort (5A) montée mobile à rotation selon un premier axe (Y-Y'), le couvercle (3) étant suspendu à ladite pièce de transmission d'effort (5A) en la zone d'accrochage (P).

8. Appareil (1) selon l'une des revendications 1 à 7 **caractérisé en ce qu'**il comprend au moins une pièce de liaison (8A) s'étendant entre une première extrémité (80A) reliée au couvercle (3) et une deuxième extrémité (80B) pourvue d'un premier tenon (81) correspondant à la zone d'accrochage (P), le moyen de commande (5) étant pourvu d'une lumière de guidage (50) accueillant ledit premier tenon (81), ce dernier étant monté à glissement au sein de ladite lumière de guidage (50).

9. Appareil (1) selon les revendications 7 et 8 **caractérisé en ce que** ladite lumière de guidage (50) est ménagée dans la pièce de transmission d'effort (5A) et s'étend longitudinalement entre une première et une seconde extrémité (50A, 50B), la distance séparant la première extrémité (50A) du premier axe (Y-Y') étant supérieure à celle séparant la seconde extrémité (50B) du premier axe (Y-Y'), le premier tenon (81) se trouvant vers la deuxième extrémité (50B) lorsque le couvercle (3) est en position de fermeture et vers la première extrémité (50A) lorsque le couvercle (3) est en position d'ouverture.

10. Appareil (1) selon l'une des revendications 1 à 9 **caractérisé en ce que** le couvercle (3) est un couvercle déformable susceptible d'évoluer entre une configuration géométrique de repos correspondant à sa position d'ouverture et une configuration géométrique déformée correspondant à sa position de fermeture, le passage d'une configuration à l'autre étant commandé par le moyen de commande (5) du déplacement du couvercle (3).

11. Appareil selon la revendication 10 **caractérisé en ce que** le couvercle (3) est un couvercle flexible.

## Patentansprüche

1. Druckkochtopf (1) mit zurückspringendem Deckel, mindestens umfassend:
- einen Behälter (2) und einen Deckel (3), der derart ausgeführt ist, dass er auf den Behälter (2) gesetzt wird, mit der Möglichkeit, zwischen mindestens einerseits einer Verschlussposition, in der er mit dem Behälter (2) einen im Wesentlichen dichten Kochraum bildet, und andererseits einer Öffnungsposition, in der er die Verbindung des Inneren des Raums mit dem Äußeren ermöglicht, bewegt zu werden,
- ein Steuermittel (5) zum Bewegen des Deckels (3) zwischen seinen Verschluss- und Öffnungspositionen, wobei der Deckel (3) am Steuermittel (5) in einer Befestigungszone (P) angehängt ist,
wobei der Kochtopf (1) **dadurch gekennzeichnet ist, dass** die Befestigungszone (P) in Bezug zum Steuermittel (5) beweglich ist, wobei die Befestigungszone (P) mit dem Steuermittel (5) mit mindestens einem Freiheitsgrad in Translation verbunden ist.

2. Kochtopf (1) nach Anspruch 1, **dadurch gekennzeichnet, dass** sich die Befestigungszone (P) in Bezug zum Steuermittel (5) entlang eines Führungsweges (C), der in dem Steuermittel (5) ausgenommen ist, bewegen kann.

3. Kochtopf (1) nach Anspruch 2, **dadurch gekennzeichnet, dass** das Steuermittel (5) zwischen mindestens einer ersten Position, die der Verschlussposition des Deckels (3) entspricht, und einer zweiten Position, die der Öffnungsposition des Deckels (3) entspricht, beweglich ist, wobei das Steuermittel (5) einer Rückstellkraft ausgesetzt ist, die von dem Deckel (3) ausgeübt wird und es in seine zweite Position zurückführt, wobei der Führungsweg (C) eine Anhaltezone (A) aufweist, die derart vorgesehen ist, dass sie die Bewegung der Befestigungszone (P) in Bezug zum Führungsweg (C) anhält, wenn die Bewegung durch die Rückstellkraft hervorgerufen ist, um auf diese Weise zu verhindern, dass das Steuermittel (5) unter der Wirkung der Rückstellkraft wieder seine zweite Position einnimmt.

4. Kochtopf (1) nach Anspruch 3, **dadurch gekennzeichnet, dass** die Anhaltezone (A) derart in dem Führungsweg (C) vorgesehen und angeordnet ist, dass, wenn sich die Befestigungszone (P) in der Anhaltezone (A) befindet, sich das Steuermittel (5) in einer stabilen Zwischenposition befindet, die zwischen seiner ersten und seiner zweiten Position angeordnet ist.

5. Kochtopf (1) nach Anspruch 3 oder 4, **dadurch gekennzeichnet, dass** sich der Führungsweg (C) entlang einer Bahn erstreckt, die eine Biegung (50C) aufweist, wobei diese Biegung (50C) die Anhaltezone (A) bildet.

6. Kochtopf (1) nach einem der Ansprüche 4 bis 5, **dadurch gekennzeichnet, dass** der Führungsweg (C) derart ausgeführt ist, dass sich die Befestigungszone (P) in einer stabilen Gleichgewichtsposition befindet, wenn sie in der Anhaltezone (A) positioniert ist.

7. Kochtopf (1) nach einem der Ansprüche 1 bis 6, **dadurch gekennzeichnet, dass** das Steuermittel (5) mindestens ein Kraftübertragungsstück (5A) umfasst, das drehbeweglich entlang einer ersten Achse (Y-Y') montiert ist, wobei der Deckel (3) an dem Kraftübertragungsstück (5A) in der Befestigungszone (P) angehängt ist.

8. Kochtopf (1) nach einem der Ansprüche 1 bis 7, **dadurch gekennzeichnet, dass** er mindestens ein Verbindungsstück (8A) umfasst, das sich zwischen einem ersten Ende (80A), das mit dem Deckel (3) verbunden ist, und einem zweiten Ende (80B), das mit einem ersten Zapfen (81) entsprechend der Befestigungszone (P) versehen ist, erstreckt, wobei das Steuermittel (5) mit einer Führungsöffnung (50) versehen ist, die den ersten Zapfen (81) aufnimmt, wobei dieser letztgenannte gleitend innerhalb der Führungsöffnung (50) montiert ist.

9. Kochtopf (1) nach den Ansprüchen 7 und 8, **dadurch gekennzeichnet, dass** die Führungsöffnung (50) in dem Kraftübertragungsstück (5A) ausgenommen ist und sich längs zwischen einem ersten und einem zweiten Ende (50A, 50B) erstreckt, wobei der Abstand zwischen dem ersten Ende (50A) und der ersten Achse (Y-Y') größer als jener zwischen dem zweiten Ende (50B) und der ersten Achse (Y-Y') ist, wobei sich der erste Zapfen (81) zum zweiten Ende (50B) hin befindet, wenn der Deckel (3) in Verschlussposition ist, und zum ersten Ende (50A) hin befindet, wenn der Deckel (3) in Öffnungsposition ist.

10. Kochtopf (1) nach einem der Ansprüche 1 bis 9, **dadurch gekennzeichnet, dass** der Deckel (3) ein verformbarer Deckel ist, der sich zwischen einer geometrischen Ruhekonfiguration, die seiner Öffnungsposition entspricht, und einer verformten geometrischen Konfiguration, die seiner Verschlussposition entspricht, bewegen kann, wobei der Übergang von einer Konfiguration zur anderen durch das Mittel (5) zur Steuerung der Bewegung des Deckels (3) gesteuert wird.

11. Kochtopf nach Anspruch 10, **dadurch gekennzeichnet, dass** der Deckel (3) ein flexibler Deckel ist.

## Claims

1. Pressure-cooking appliance (1) with a re-entrant lid, comprising at least:
- a vessel (2) and a lid (3) designed to be attached in the vessel (2) with an ability to move between at least firstly a closed position in which it forms with the vessel (2) a substantially sealed cooking chamber, and secondly an open position in which it enables the inside of the chamber to communicate with the outside,
- a means (5) for controlling the movement of the lid (3) between its closed and open positions, the lid (3) being suspended from the control means (5) in an attachment area (P),
said appliance (1) being **characterised in that** the attachment area (P) is able to move relative to the control means (5), said attachment area (P) being connected to the control means (5) with at least one degree of freedom in translation.

2. Appliance (1) according to claim 1, **characterised in that** the attachment area (P) is capable of moving relative to the control means (5) on a guide path (C) provided in said control means (5).

3. Appliance (1) according to claim 2, **characterised in that** the control means (5) is able to move between at least a first position corresponding to the closed position of the lid (3) and a second position corresponding to the open position of the lid (3), said control means (5) being subjected to a return force exerted by the lid (3) driving it towards its second position, said guide path (C) having a stop area (A) conformed so as to stop the movement of the attachment area (P) relative to the guide path (C) when said movement is caused by said return force, so as thus to prevent the control means (5) from joining its second position under the effect of the return force.

4. Appliance (1) according to claim 3, **characterised in that** the stop area (A) is conformed and positioned in the guide path (C) so that, when the attachment area (3) is situated in said stop area (A), the control means (5) is situated in a stable intermediate position situated between its first and second positions.

5. Appliance (1) according to claim 3 or 4, **characterised in that** the guide path (C) extends on a path having a change in direction (50C), said change in direction (50C) forming the stop area (A).

6. Appliance (1) according to one of claims 4 to 5, **characterised in that** the guide path (C) is conformed so that the attachment area (P) is situated in a stable equilibrium position when it is positioned in the stop area (A).

7. Appliance (1) according to one of claims 1 to 6, **characterised in that** the control means (5) comprises at least one force transmission part (5A) mounted so as to be able to move in rotation on a first axis (Y-Y'), the lid (3) being suspended from said force transmission part (5A) in the attachment area (P).

8. Appliance (1) according to one of claims 1 to 7, **characterised in that** it comprises at least one connecting part (8A) extending between a first end (80A) connected to the lid (3) and a second end (80B) provided with a first tenon (81) corresponding to the attachment area (P), the control means (5) being provided with a guide aperture (50) accepting said first end of a tenon (81), the latter being mounted slightly within said guide aperture (50).

9. Appliance (1) according to claims 7 and 8, **characterised in that** said guide aperture (50) is provided in the force transmission part (5A) and extends longitudinally between a first and second end (50A, 50B), the distance separating the first end (50A) from the first axis (Y-Y') being greater than that separating the second end (50B) from the first axis (Y-Y'), the first tenon (81) being situated towards the second end (50B) when the lid (3) is in the closed position and towards to the first end (50A) when the lid (3) is in the open position.

10. Appliance (1) according to one of claims 1 to 9, **characterised in that** the lid (3) is a deformable lid able to change between a geometric configuration of rest corresponding to its open position and a deformed geometric configuration corresponding to its closed position, the passage from one configuration to the other being controlled by the means (5) for controlling the movement of the lid (3).

11. Appliance according to claim 10, **characterised in that** the lid (3) is a flexible lid.
